# EUROPÄISCHE PATENTSCHRIFT

(11) **EP 1 518 064 B1**
(45) Veröffentlichungstag und Bekanntmachung des Hinweises auf die Patenterteilung: **03.08.2011**
(21) Anmeldenummer: 03735394.3
(22) Anmeldetag: 15.05.2003
(51) Int. Cl.: F16H 57/02, F16H 1/46

(54) **SYSTEM ZUM HERSTELLEN VON GETRIEBEN**
SYSTEM FOR PRODUCING GEARBOXES
SYSTEME POUR LA PRODUCTION DE TRANSMISSIONS

(30) Priorität: 03.07.2002 DE 10229968
(43) Veröffentlichungstag der Anmeldung: 30.03.2005
(73) Patentinhaber: Wittenstein AG, 97999 Igersheim (DE)
(72) Erfinder: WITTENSTEIN, Manfred, 97980 Bad Mergentheim (DE); BAYER, Thomas, 97999 Igersheim (DE)
(74) Vertreter: Weiss, Peter
(86) Internationale Anmeldenummer: PCT/EP2003/005101
(87) Internationale Veröffentlichungsnummer: WO 2004/005763

(56) Entgegenhaltungen:
- EP-A- 0 687 837
- WO-A-01/13007
- DE-A- 2 649 949
- US-A- 3 333 482
- "KOMPAKTGETRIEBE FUER DEN INDUSTRIE-EINSATZ" ANTRIEBSTECHNIK, KRAUSSKOPF VERLAG FUR WIRTSCHAFT GMBH. MAINZ, DE, Bd. 20, Nr. 1/2, 1981, Seite 23 XP002052149 ISSN: 0722-8546
- DIPL.-ING HUSTEDE: "Planurex-Planetengetriebe" V.D.I.-ZEITSCHRIFT, Nr. 7, April 1986 (1986-04), Seiten 233-234, XP002254394 Düsseldorf
- BOLOTOVSKII I A ET AL: "TWO-ROW PLANETARY GEAR MECHNISMS WITH SINGLE-CROWN SATELLITES" RUSSIAN ENGINEERING RESEARCH, ALLERTON PRESS, NEW YORK, US, Bd. 19, Nr. 6, 1999, Seiten 1-11, XP000976860 ISSN: 1068-798X

## Beschreibung

Die Erfindung betrifft ein System zum Herstellen von Getrieben, welche aus verschiedenen Baugruppen bestehen

Es sind Getriebe bekannt, die aus ein, zwei oder ggf. drei Gehäuseteilen bestehen und entsprechende Stufen, Übersetzungsstufen etc. aufweisen.

Ferner sind Kinematiken bekannt, bei Getrieben als SP- oder TP-Kinematiken. Die einzelnen Getriebe sind als Baureihen, beispielsweise in der Kinematik SP oder in der Kinematik TP ausgeführt. Dabei können entweder nur lange gerade Getriebe mit einer bestimmten Baureihe ausgeführt werden. Mit ganz anderen Baugruppen können kurze, dicke Getriebe, beispielsweise als TP-Getriebe ausgeführt werden.

Es gibt daher nur verschiedene Grundbauarten, Getriebe mit unterschiedlichen Kinematiken.

Die DE 26 49 949 A beschreibt ein Getriebe-System, bei welchem Getriebe mit unterschiedlichen Übersetzungsstufen in unterschiedlichen Baugrössen hergestellt werden können. Dabei können lediglich vereinzelt Bauteile für die unterschiedlichen Baugrössen verwendet werden. Die gattungsgemäβen EP 0 687 837 A offenbart ein Motor-Getriebesystem, bei welchem auf einen Antriebsmotor unterschiedliche Abtriebsstufen aufsetzbar sind.

Aus der US 3,333,482 ist ein Elektromotor mit nachgeschaltetem Planetengetriebe aufgezeigt, wobei das Planetengetriebe im Gehäuse des Elektromotors integriert angeordnet ist.

Der vorliegenden Erfindung liegt daher die Aufgabe zugrunde, ein System der eingangs genannten Art zu schaffen, welches universell einsetzbar ist und bei welchem zumindest teilweise Baugruppen für unterschiedlichste Kinematiken und Grundbauarten von Getriebe verwendet werden können.

Dabei sollen die Anzahl von Baugruppen für beliebige Typen minimiert werden, wobei verschiedene Kinematiken, Übersetzungsverhältnisse bzw. Leistungsflüsse realisiert werden sollen. Ferner sollen die Teile zur Reduktion von Fertigungskosten reduziert werden.

Zur Lösung dieser Aufgabe führt, dass die Baugruppen baukastenartig zu unterschiedlichen Getrieben zusammensetzbar sind und über die Wahl der Abtriebseinheit entweder als Abtriebswelle oder als Abtriebsflansch und durch unterschiedliche Montage eines Hohlrades nach rechts oder nach links mit den anschliessenden Bauteilen ein unterschiedlicher Getriebe mit SP- oder TP-Kinematik herstellbar ist.

Bei der vorliegenden Erfindung können mit den wesentlichen Kernbaugruppen, wie beispielsweise Motor, Adapterplatte Motor, Hohlwellenrad der Abtriebsstufe, Hohlrad der Antriebsstufe sowie Abtriebseinheit, ausgeführt als Abtriebswelle oder Abtriebsflansch, ein-, zwei- oder dreistufige Getriebe mit unterschiedlichen Abtriebseinheiten hergestellt werden. Dabei soll die Abtriebseinheit als Abtriebswelle oder als Abtriebsflansch ausgebildet sein.

Ferner ist wichtig bei der vorliegenden Erfindung, dass über unterschiedliche Montagen ein entsprechendes unterschiedliches Verbinden des Hohlrades der Antriebsstufe mit einerseits einem Universalplanetenradträger der Antriebsstufe mit dem feststehenden Gehäuse verschraubt werden kann, um ein Getriebe der SP-Kinematik zu realisieren.

Dabei können sämtliche Getriebe als TP- oder SP-Getriebe mit den gleichen Kernbauteilen zusammenmontiert werden, ohne das zusätzliche andere zusätzliche Bauteile erforderlich sind.

Gleichzeitig kann in dem Universalsystem bzw. Universalbaukasten jeweils ein ein-, zwei- oder dreistufiges Getriebe wählbar mit Einheiten hergestellt werden.

Hierdurch wird die Anzahl sämtlicher Baugruppen für unterschiedliche Getriebekinematiken und unterschiedliche Getriebetypen, ob lang oder kurz bzw. TP- oder SP-Getriebe erheblich reduziert.

Dabei sind verschiedene Kinematiken auch Übersetzungsverhältnisse und Leistungsflüsse mit ein und denselben Baugruppen realisierbar.

Ferner können die einzelnen Baugruppen bzw. Gehäuseteile miteinander verschraubt oder verschweisst, verklebt oder über formschlüssige Verbindungen miteinander verbunden werden. D.h. ferner, dass auch kundenspezifische Getriebe, was insbesondere beispielsweise Flansche, Wellen, Abtriebsflansche, Sensoren od. dgl. betrifft, sehr leicht zu spezifizieren sind, da lediglich diese Baugruppe der Abtriebseinheit bzw. der Abtriebswelle bzw. des Abtriebsflansches spezifiziert und angepasst werden müssen. Alle übrigen Baugruppen können zur Herstellung eines ein-, zwei- oder dreistufigen Getriebes als TP- oder SP-Ausführung ihre ursprüngliche Form beibehalten.

Auch können entsprechende einzelne Baugruppen der Abtriebswelle oder des Abtriebsflansches beispielsweise mit entsprechenden Sensoren od. dgl. versehen werden. Dies soll ebenfalls im Rahmen der vorliegenden Erfindung liegen.

Insbesondere die Wahl der Abtriebsbaugruppen bzw. der Abtriebseinheiten eignen sich besonders zur Spezifizierung von Getrieben für spezielle kundenspezifische Veränderungen od. dgl..

Auch ist denkbar, ggf. an ein-, zwei- oder dreistufige Getriebe, ausgeführt als SP- oder TP-Getriebe, unterschiedliche Motoren und Anbauteile zuflanschen. Hierdurch entsteht ein universelles System, insbesondere ein Universalbaukasten, welcher gewährleistet, dass die einzelnen Baugruppen zur Herstellung von Getrieben mit unterschiedlichen Kinematiken, unterschiedlichen wählbaren Übersetzungsverhältnissen und unterschiedliche Getriebeausführungen bzw. Getriebetypen als SP- oder TP-Baureihen in ein und derselben Anzahl von Baugruppen aufgebaut werden kann. Dies spart erhebliche Fertigungskosten ein und gewährleistet dem Benutzer, dass er selbst anwenderspezifisch ein Getriebe aufbauen kann. Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1a eine schematisch dargestellte Anordnung von einzelnen Baugruppen zum Herstellen von unterschiedlichen Getrieben, insbesondere zum Herstellen eines einstufigen, zweistufigen und dreistufigen Getriebes;
Figur 1b schematisch dargestellte Ansichten auf einen Kinematikplan eines SP-Getriebes und eines TP-Getriebes;
Figur 2a und 2b schematisch dargestellte Draufsichten auf einen Motor sowie eine Adapterplatte für einen Motor;
Figuren 3a und 3b schematisch dargestellte Längsschnitte durch zwei verschiedene Anbauteile mit Klemmnaben und integriertem Sonnenrad;
Figur 3c einen schematisch dargestellten Längsschnitt durch ein weiteres Anbauteil mit integriertem Sonnenrad und Planetenrad;
Figur 4 einen schematisch dargestellten Längsschnitt durch das Bauteil Hohlrad der Antriebsstufe;
Figur 5 einen schematisch dargestellten Längsschnitt durch ein weiteres Bauteil als Hohlwellenrad der Abtriebsstufe;
Figuren 6a und 6b schematisch dargestellte Längsschnitte durch Abtriebseinheiten, ausgeführt als Abtriebsflansch A_{F} oder Abtriebswelle A_{W}.

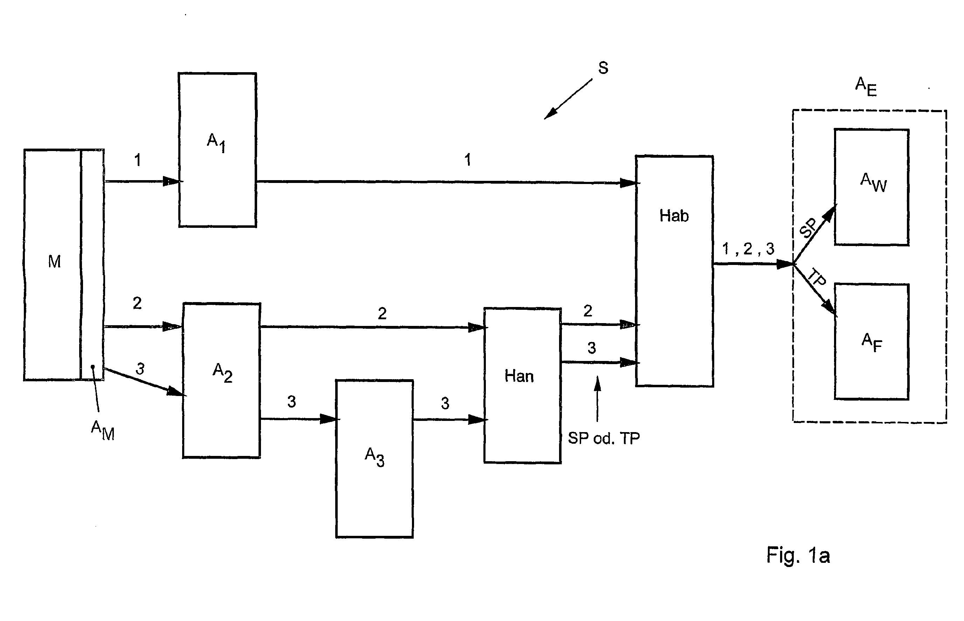

Gemäss Figur 1a zeigt ein erfindungsgemässes System S zum Herstellen von unterschiedlichen Getrieben, einstufigen, zweistufigen oder dreistufigen Getrieben unterschiedliche Möglichkeiten auf, ein ein- oder zwei- oder dreistufiges Getriebe aus unterschiedlichen Baugruppen, zusammenzusetzen, wobei gewisse gleiche Baugruppen in jedem Getriebe verwendet werden können.

Jedes Getriebe kann auch als Baugruppe von Bauteilen mit Motor M ggf. Adapterplatte Motor AM sowie das Hohlwellenrad H_{ab} und eine hier gestrichelt dargestellte Abtriebseinheit A_{E} verwendet werden.

Dabei kann als Abtriebseinheit A_{E} dem Hohlwellenrad der Abtriebsstufe H_{ab} wahlweise eine Abtriebswelle A_{W} oder ein Abtriebsflansch A_{F} als Baugruppe nachgeschaltet werden.

Soll ein einstufiges Getriebe hergestellt werden, so werden die Baugruppen Motor ggf. Adapterplatte AM ein erstes Anbauteil A₁ dann das Hohlwellenrad der Abtriebsstufe H_{ab} und abschliessend eine beliebige Abtriebseinheit A_{E} angefügt. An das Hohlwellenrad der Abtriebsstufe H_{ab} schliesst entweder die Abtriebswelle A_{W} oder Abtriesflansch A_{F} als Abtriebseinhiet A_{E} an. Die Ausführung der Abtriebseinheit A_{E} ist kundenspezifisch wählbar und lässt sich auch kundenspezifisch ändern.

Hierdurch entsteht ein einstufiges Getriebe, welches sich insbesondere im Bereich der Abtriebseinheit A_{E} kundenspezifisch modifizieren lässt. Beispielsweise können beliege Flansche, Sonderausführungen von Wellen, Sensoren od. dgl. in diesen Baugruppen modifiziert sein oder diese entsprechend verändert werden.

Diese passen dann noch auf die Baugruppen Motor M, Anbauteil A₁ bzw. insbesondere auf das Hohlwellenrad der Abtriebsstufe H_{ab}.

Um ein zweistufiges Getriebe zu erhalten, wird ebenfalls wieder der Motor M, ggf. die Adapterplatte Motor AM mit einem zweiten Anbauteil A₂ verbunden, an welches ein Hohlrad der Antriebsstufe Hₐₙ anschliesst. An dieses schliesst dann in oben beschriebener Weise das Hohlwellenrad der Abtriebsstufe H_{ab} an, woran wieder in oben beschriebener Weise je nach Kundenwunsch und Ausführungsform eine beliebige Antriebseinheit A_{E} als Abtriebswelle A_{w} oder als Abtriebsflansch A_{F} ausgeführt sein kann. Wichtig ist hier, dass zumindest bei der Auführung eines ein- oder zweistufigen Getriebes zumindest die Baugruppen Motor M, Adapterplatte Motor A_{M} und Hohlwellenrad der Abtriebsstufe H_{ab} und wahlweise die Abtriebseinheit A_{E} wieder ohne Änderungen als gleiche Baugruppen verwendet werden können.

Um ein dreistufiges Getriebe zu erhalten muss bei einem entsprechenden Aufbau des zweistufigen Getriebes lediglich zwischen die Baugruppen, Anbauteil A₂ und Hohlrad der Antriebsstufe Hₐₙ ein weiteres Anbauteil A₃ dazwischen eingesetzt werden.

Je nach Kundenwunsch und Ausführung des dreistufigen Getriebes lässt sich dann in oben beschriebener Weise an das Hohlwellenrad der Abtriebsstufe H_{ab} wahlweise eine beliebige Antriebseinheit A_{E} als Antriebswelle A_{W} oder Antriebsflansch A_{F} anschliessen.

Um mit diesen wenigen Baugruppen ein ein-, -zwei- oder dreistufiges Getriebe zu realisieren, wobei die jeweiligen gekennzeichneten Baugruppen entsprechend mit 1 für einstufig, 2 für zweistufig oder 3 für dreistufig jeweils verbunden werden müssen, können unterschiedliche Getriebe zusammengesetzt werden.

Auf diese Weise lässt sich baukastenartig mit einer minimalen Anzahl von Baugruppen ein zwei- oder dreistufiges Getriebe realisieren. Die einzelnen Baugruppen müssen lediglich miteinander verschraubt, verschweisst, zusammengefügt oder sonstwie miteinander verbunden werden. Hierauf sei die Erfindung nicht beschränkt.

Ferner ist von Vorteil, dass insbesondere durch die Wahl von Antriebseinheit A_{E} als Antriebswelle A_{W} oder Antriebsflansch A_{F} lange oder kurze Getriebe mit spezifischen Wellen oder Flanschen ein- oder mehrstufig hergestellt werden können. Hierdurch können unterschiedliche Übersetzungsverhältnisse, Leistungsflüsse durch verschiedene Kinematiken als TP oder SP ausgeführt werden.

Hierdurch lassen sich Getriebe universell herstellen, wobei mit ein und denselben, im wesentlichen gleichen Baugruppen Getriebe hergestellt werden können, die unterschiedliche Typen, die unterschiedliche Kinematiken besitzen. Dies wird lediglich mit einer ganz begrenzten Anzahl von Baugruppen als Universalbaukasten realisiert. Dabei können die unterschiedlichen Getriebetypen als SP- oder TP-Getriebe aus Baugruppen ein-, zwei- und dreistufige hergestellt werden. Auf diese Weise lässt sich nicht nur der Getriebetyp sondern auch die gewünschte Grösse des Getriebes und die gewünschte Kinematik des Getriebes kundenspezifisch variieren und individuell mit ein und demselben Bauteil erstellen.

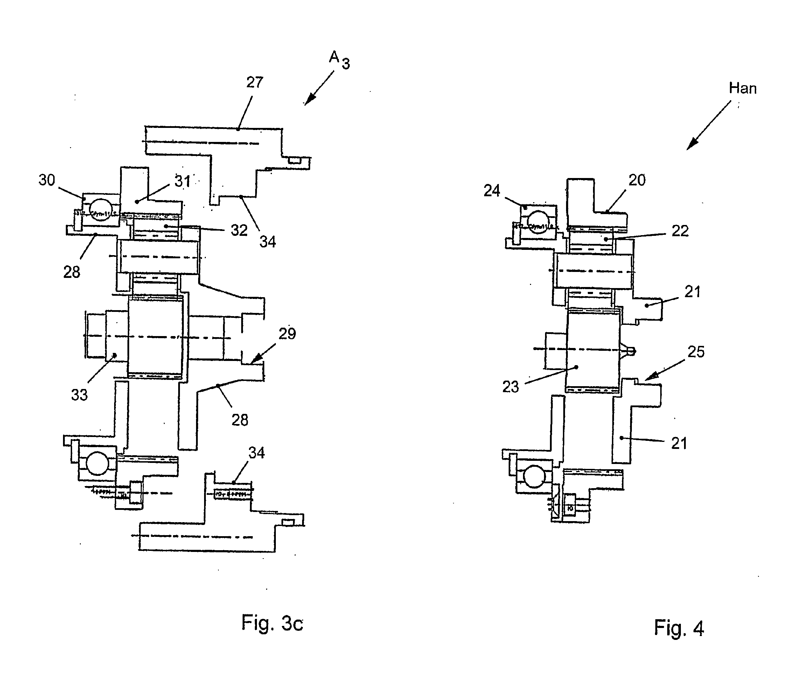

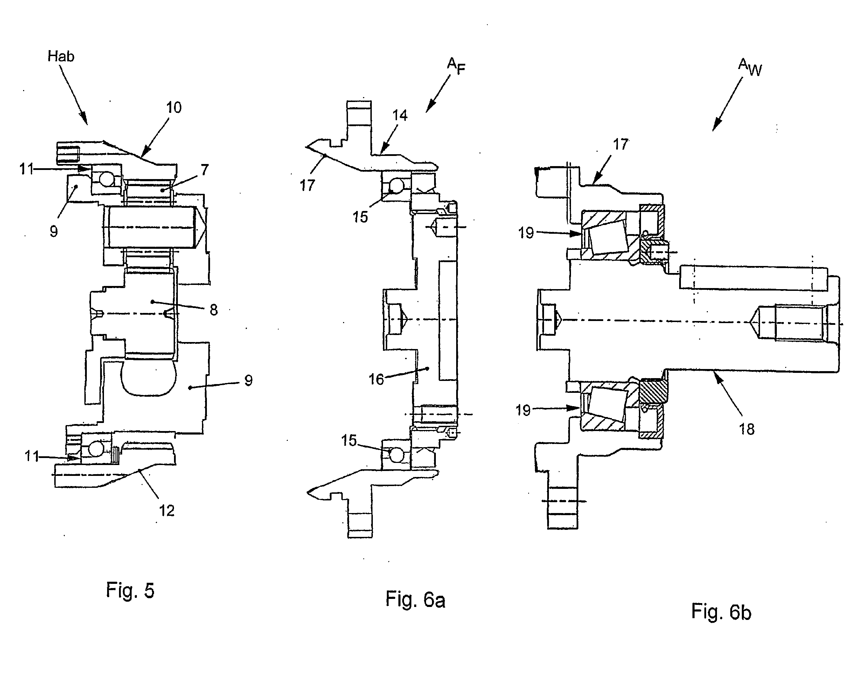

Zur Herstellung eines zweistufigen TP-Getriebes wird das Hohlrad 20 des Hohlrades der Antriebsstufe Hₐₙ, siehe Figur 4, mit dem Universalplanetenradträger 9 des Hohlwellenrades H_{ab} der Abtriebsstufe, siehe Figur 5, fest verbunden, insbesondere fest verschraubt.

Zur Herstellung eines zweistufigen SP-Getriebes, wird durch einen anderen Montagevorgang ein Hohlrad 20 des Hohlrades der Antriebsstufe Hₐₙ mit dem feststehenden Gehäuseteil 3 des Anbauteiles A₂ fest verbunden, insbesondere fest verschraubt.

Dabei können die gleichen Baugruppen Hohlwellenrad der Abtriebsstufe H_{ab} und Hohlrad der Antriebsstufe Hₐₙ sowie Anbauteil A₂ verwendet werden, um entweder ein SP- oder TP-Getriebe zu realisieren. Es kommt hier lediglich auf den unterschiedlichen Montagevorgang der einzelnen Baugruppen an und um hier unterschiedliche Kinematiken mit ein und denselben Baugruppen zu erhalten.

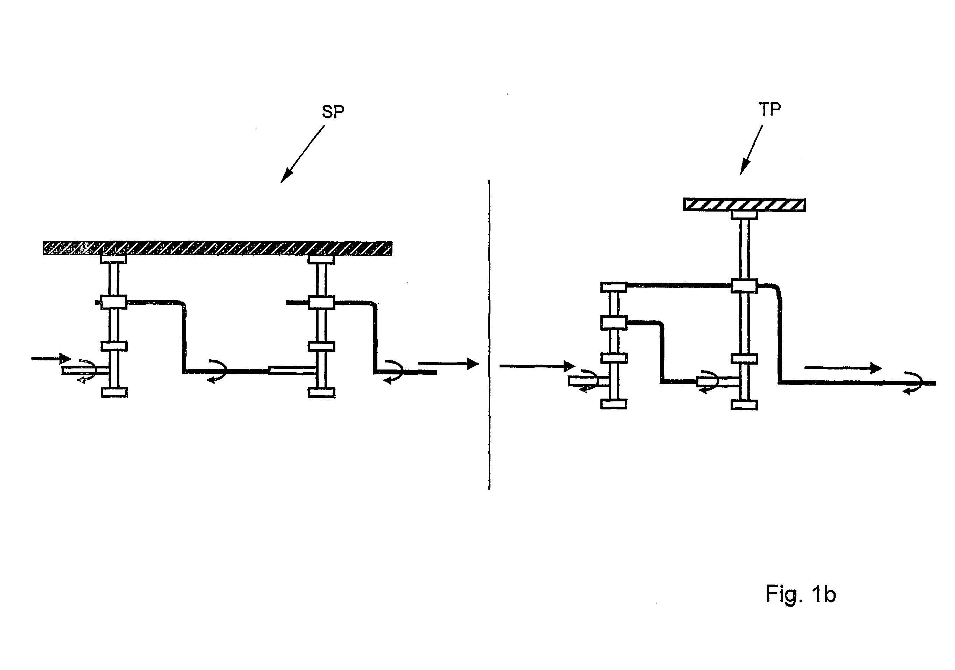

Im folgenden werden die einzelnen Baugruppen zum Herstellen der unterschiedlichen Getriebe wie folgt beschrieben:
Die unterschiedlichen Kinematiken eines SP-Getriebes oder eines TP-Getriebes sind schematisch in Figur 1b dargestellt. Bein Kinematikplan eines SP-Getriebes ergeben sich andere Übersetzungsverhältnisse als beim TP-Getriebe. Auf Einzelheiten des Kinematikplanes des SP- und TP-Getriebes wird nicht näher eingegangen, da dies im Stand der Technik bekannt ist.

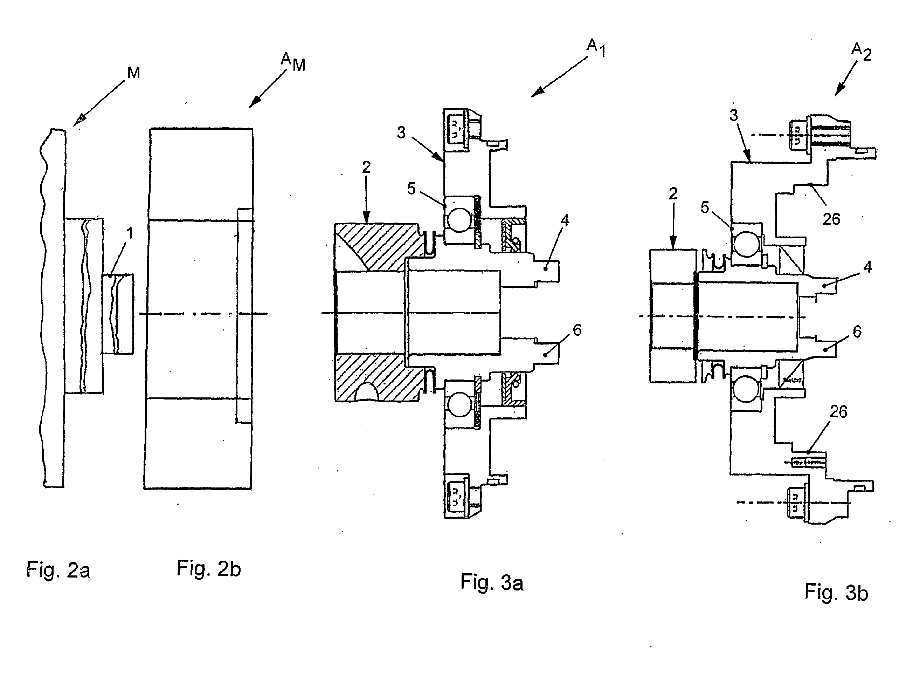

Gemäss Figur 2a kann ein beliebiger Motor M mit einer Motorwelle 1 direkt mit einem Anbauteil A₁ oder A₂, wie es insbesondere in Figur 3a und 3b dargestellt ist, verbunden werden. Ggf. wird eine Adapterplatte Motor A_{M} dazwischen eingesetzt, wobei sich die Adapteroplatte Motor AM mit den Anbauteilen A₁ oder A₂ verbinden lässt.

Die hier nur angedeutete Motorwelle 1 greift in eine entsprechende Klemmnabe 2 der Baugruppen A1 oder A2 ein. Das Anbauteil A1 bzw. A2 weist ausser einer Klemmnabe 2 ein Gehäuseteil 3 auf, in welchem jeweils ein Sonnerad 4 über Lager 5 gelagert ist, wobei das Sonnenrad 4 als Steckhülse 6 ausgeführt ist.

Die Anbauteile A₁ und A₂ der Figuren 3a und 3b unterscheiden sich lediglich etwas in der Form und Dimensionierung des Gehäuseteiles 3.

Bei der Herstellung des einstufigen Getriebes ist der Motor M direkt mit der Klemmnabe 2 bzw. mit dem Anbauteil A₁ verbunden. An das Anbauteil A₁ schliesst das Hohlwellenrad der Abtriebsstufe H_{ab} verbunden, welches in Figur 5 dargestellt ist. Dabei weist das Hohlwellenrad der Abtriebsstufe H_{ab} ein Planetenrad 7 auf, welches mit einem Sonnenrad 8 in Eingriff steht. Ein Planetenrad 9 ist in einem Gehäuseteil 10 über Lager 11 gelagert. Das Gehäuseteil 10 ist im äusseren Bereich mit einem Zentrierflansch 12 versehen, auf welchen die in den Figuren 6a und 6b dargestellten Antriebswelle A_{W} oder Abtriebsflansch A_{F} aufsteckbar ist.

In Figur 5 ragt der Universalplanetenradträger 9 etwas über das Gehäuseteil 10 hervor. Der Abtriebsflansch A_{F} weist ein Gehäuseteil 14 auf, in welchem ein Lager 15 sowie ein Flansch 16 vorgesehen ist.

Der Flansch 16 dient zum Aufnehmen und Anschliessen von beliebigen Werkstücken und/oder Werkzeugen oder zum Antreiben von beliebigen Lasten od.dgl..

Ferner ist der Gehäuseteil 14 mit einem passenden Zentrierflansch 17 versehen, der auf den entsprechenden Zentrierflansch 12 des Hohlwellenrades der Abtriebsstufe H_{ab} zusammenpasst. Wird bei dem einstufigen Getriebe als Abtriebseinheit A_{E} der Abtriebsflansch A_{F} gewählt, so passen die Gehäuseteile 14 und 10 passgenau ineinander, wobei das Lager 15 des Antriebsflansches A_{F} gleichzeitig eine zusätziche Lagerung des Universalplanetenradträgers 9 des Hohlwellenrades der Abtriebsstufe H_{ab} bildet.

Dabei wird kraft- und/oder formschlüssig der Universalplanetenradträger 9 mit dem Flansch 16 des Abtriebsflansches A_{F} verbunden.

Wird bei dem einstufigen Getriebe an das Hohlwellenrad H_{ab} die Antriebswelle A_{W} adaptiert und angeschlossen, so schliesst ein Gehäuseteil 17, wie es insbesondere in Figur 6b dargestellt ist, stirnseitig an das Gehäuseteil 10 des Hohlwellenrades H_{ab} an. Innerhalb des Gehäuseteiles 17 ist eine Welle 18 über ein Lager 19 gelagert.

Wichtig ist ferner bei der vorliegenden Erfindung, dass sich bei Abtriebswelle A_{W} und Abtriebsflansch A_{F}, wie es in den Figuren 6a und 6b dargestellt ist, die Ausführungsform, die Grösse der Gehäuseteile 14 und 17 verändern und kundenspezifisch ausgebilden lassen. Gleiches gilt auch für die Grösse, die Art des Flansches 16 bzw. der Welle 18. Wird, wie es in Figur 1 dargestellt ist, ein zweistufiges Getriebe aufgebaut, so wird der Motor M das Anbauteil A₂, wie es in Figur 3b beschrieben ist, zusammengefügt, ggf. mit dazwischengesetzter Adapterplatte A_{M}, wobei zwischen das Anbauteil A₂ das Hohlwellenrad H_{ab} der Abtriebsstufe ein Hohlrad der Antriebsstufe Hₐₙ dazwischen eingesetzt wird, wie es insbesondere in Figur 4 dargestellt ist. Dieses weist ein Hohlrad 20 auf, in welchem ein Universalplanetenradträger 21 zumindest einen Planeten 22 trägt, der ein Sonnenrad 23 kämmt. Dabei ist der Universalplanetenradträger 21 jeweils beidseits des Sonnenrades 22 ausgebildet und trägt einerseits ein Lager 24 und ist auf der gegenüberliegenden Seite als Steckhülse 25 ausgebildet.

Im Bereich der Steckhülse 25 schliesst an das Hohlrad der Antriebsstufe Hₐₙ das Hohlwellenrad der Abtriebsstufe H_{ab} an, in dem das Sonnenrad 8 form- und/oder kraftschlüssig mit dem Universalplanetenradträger 21 verbunden wird und ein innenliegender Bereich des Universalplanetenradträgers 9, siehe Figur 5, in das Hohlrad 20 eingreift und das Hohlrad Hₐₙ der Antriebsstufe integiert bzw. lagert.

Das Hohlrad der Antriebsstufe Hₐₙ ist als sogenannte zweite Stufe, insbesondere Vorstufe zwischen Anbauteil A₂ und Hohlrad der Antriebsstufe Hₐₙ einsetzbar.

Das Lager 24 des Hohlrades der Antriebsstufe Hₐₙ wird beim Zusammenfügen der Baugruppen A₂ und Hₐₙ im Gehäuseteil 3 auf einem Lagersitz 26 des Gehäuseteiles 3, der Baugruppe A₂, siehe Figur 3b, gelagert bzw. aufgenommen. Formschlüssig wird das Sonnenrad 4 des Anbauteiles A₂ mit dem Sonnenrad 23 des Hohlrades Hₐₙ verbunden.

Ferner lassen sich die Gehäuseteile 3 und 10 des Anbauteiles A₁ bzw. Hohlwellenrad der Abtriebsstufe H_{ab}, wie es in den Figuren 3b und 5 dargestellt ist, miteinander verbinden, wobei dazwischen das Hohlrad der Antriebsstufe Hₐₙ in oben beschriebener Weise eingesetzt ist. Die Gehäuseteile 3 und 10 können miteinander verschraubt, verschweisst oder auch kraft- oder formschlüssig miteinander verbunden werden.

Um ein dreistufiges Getriebe zu realisieren, werden die Baugruppen Motor ggf. Adapterplatte Motor AM mit dem Anbauteil A₂ (siehe Figur 3b) in oben beschriebener Weise verbunden, wobei zwischen Anbauteil A₂ und dem oben beschriebenen Hohlrad der Antriebsstufe Hₐₙ ein Anbauteil A₃ zwischengeschaltet eingesetzt wird. Dabei besteht das Anbauteil A₃ aus einem Gehäuseteil 27, welcher das Gehäuseteil 10 des Hohlwellenrades der Abtriebsstufe H_{ab} und andererseits den Gehäuseteil 3 des Antbauteiles A₂ miteinander verbindet.

Innerhalb des Gehäuseteiles 27 ist ein Hohlrad 31 vorgesehen, welches einen Planeten 32 kämmt, der auf einem Universalplanetenradträger 28 sitzt. Zumindest ein Planet 32 kämmt ein Sonnenrad 33. Ferner sitzt auf einem Teil des Universalplanetenradträgers 28 ein Lager 30. Diese Baugruppen entsprechen in etwa dem Aufbau des Hohlrades der Antriebsstufe Hₐₙ, wie es in Figur 4 aufgezeigt ist.

Wird das Anbauteil A₃ mit dem Hohlrad der Antriebsstufe Hₐₙ zusammengefügt, so greift form- und/oder kraftschlüssig das Sonnenrad 23 in die Steckhülse 29 des Planentenradträgers. 28 ein, wobei das Lager 24 in einem Lagersitz des Gehäuseteiles 27 gelagert ist. Hierdurch überträgt der Universalplanetenradträger 28 das Moment auf die Sonne 23.

Andererseits werden beim Verbinden der Baugruppen A₂ und A₃ zum Herstellen des dreistufigen Getriebes die Gehäuseteile 3 und 27 miteinander verbunden, wobei das Lager 30 in den Lagersitz 26 eingreift und das Sonnenrad 33 in die Steckhülse 6 des Planentradträgers 4 des Anbauteiles A2 eingreift.

Hierdurch wird ebenfalls eine Zwischenstufe hergestellt.

Um ein TP-Getriebe mit einer TP-Kinematik zu realisieren, insbesondere einer zweistufigen Ausführung wird das Hohlrad 20 des Hohlrades der Antriebsstufe Hₐₙ am Universalplanetenradträger 9 des Hohlwellenrades H_{AB} der Abtriebsstufe verbunden bzw. verschraubt.

Soll ein Getriebe, beispielsweise ein zweistufiges Getriebe der SP-Kinematik hergestellt werden, so wird ein anderer Montagevorgang das Hohlrad 20 des Hohlrades der Antriebsstufe Hₐₙ an dem feststehenden Gehäuseteil 3 des Anbauteiles A₂, siehe Figuren 3b und 4, angeschraubt.

Auf diese Weise lässt sich mit den Baugruppen Hₐₙ, H_{ab} und A₂ durch unterschiedliche Montage der einzelnen Baugruppen ein SP- oder TP-Getriebe zusammensetzen.

### Positionszahlenliste

| | | | | | |
|---|---|---|---|---|---|
| 1 | Motorwelle | 34 | Lagersitz | 67 | |
| 2 | Klemmnabe | 35 | | 68 | |
| 3 | Gehäuseteil | 36 | | 69 | |
| 4 | Sonnenrad | 37 | | 70 | |
| 5 | Lager | 38 | | 71 | |
| 6 | Steckhülse | 39 | | 72 | |
| 7 | Planetenrad | 40 | | 73 | |
| 8 | Sonnenrad | 41 | | 74 | |
| 9 | Universalplaneten-radträger | 42 | | 75 | |
| 10 | Gehäueteil | 43 | | 76 | |
| 11 | Lager | 44 | | 77 | |
| 12 | Zentrierflansch | 45 | | 78 | |
| 13 | Flansch | 46 | | 79 | |
| 14 | Gehäuseteil | 47 | | | |
| 15 | Lager | 48 | | A_{E} | Abtriebseinheit |
| 16 | Flansch | 49 | | A_{F} | Abriebsflansch |
| 17 | Gehäuseteil | 50 | | A_{M} | Adapterplatte Motor |
| 18 | Welle | 51 | | A_{w} | Abtriebswelle |
| 19 | Lager | 52 | | A₁ | Anbauteil |
| 20 | Hohlrad | 53 | | A₂ | Anbauteil |
| 21 | Universalplaneten-radträger | 54 | | A₃ | Anbauteil |
| 22 | Planet | 55 | | H_{ab} | Hohlwellenrad d. Abtriebsstufe |
| 23 | Sonnenrad | 56 | | Hₐₙ | Hohlrad d. Antriebsstufe |
| 24 | Lager | 57 | | M | Motor |
| 25 | Steckhülse | 58 | | S | System |
| 26 | Lagersitz | 59 | | SP | Getriebe |
| 27 | Gehäuseteil | 60 | | TP | Getriebe |
| 28 | Universalplaneten-radträger | 61 | | | |
| 29 | Steckhülse | 62 | | | |
| 30 | Lager | 63 | | | |
| 31 | Hohlrad | 64 | | | |
| 32 | Planet | 65 | | | |
| 33 | Sonnenrad | 66 | | | |

## Patentansprüche

1. System zum Herstellen von Getrieben, welche aus verschiedenen Baugruppen (M, A_{M}, A₁, A₂, A₃, Hₐₙ, H_{ab}, A_{E}) bestehen,
**dadurch gekennzeichnet,**
**dass** die Baugruppen (M, A_{M}, A₁, A₂, A₃, Hₐₙ, H_{ab}, A_{E}) baukastenartig zu unterschiedlichen Getrieben zusammensetzbar sind und über die Wahl der Abtriebseinheit (A_{W}) entweder als Abtriebswelle (A_{F}) oder als Abtriebsflansch (A_{F}) ein unterschiedlicher Getriebetyp mit unterschiedlicher Kinematik herstellbar ist, und durch unterschiedliche Montage eines Hohlrades (20) nach rechts oder nach links mit den anschliessenden Bauteilen ein Getriebe mit SP- oder TP-Kinematik realisiert ist. .

2. System nach Anspruch 1, **dadurch gekennzeichnet, dass** die Baugruppen Motor (M) und ggf. Adapterplatte Motor (A_{M}) Hohlwellenrad der Abtriebsstufe (H_{ab}) und Abtriebseinheiten (A_{E}) für alle Getriebe verschiedener Baureihen gleich sind.

3. System nach Anspruch 1 oder 2, **dadurch gekennzeichnet, dass** ein einstufiges Getriebe aus den Baugruppen Motor (M), ggf. Adapterplatte Motor (A_{M}) Hohlwellenrad der Abtriebsstufe (H_{ab}) zusammensetzbar ist.

4. System nach Anspruch 1 oder 2, **dadurch gekennzeichnet, dass** ein zweistufiges Getriebe aus den Baugruppen Motor (M) ggf. Adapterplatte Motor (A_{M}) einem Anbauteil (A₂) einem Hohlrad der Antriebsstufe (Hₐₙ), dem Hohlwellenrad der Abtriebsstufe (H_{ab}) und der Abtriebseinheit (A_{E}) zusammensetzbar ist.

5. System nach Anspruch 1 oder 2, **dadurch gekennzeichnet, dass** ein dreistufiges Getriebe aus den Baugruppen Motor (M) ggf. Adapterplatte Motor (A_{M}) Anbauteil (A₂), daran anschliessendem Anbauteil (A₃), daran anschliessenden Hohlwelle der Antriebsstufe (Hₐₙ) und daran anschliessenden Hohlwellenrad der Abtriebsstufe (H_{ab}) und Abtriebseinheit (A_{E}) gebildet ist.

6. System nach Anspruch 4 und 5, **dadurch gekennzeichnet, dass** bei zweistufigen und bei dreistufigen unterschiedlichen Getrieben die Baugruppen Motor (M) Anbauteil (A₂), Hohlrad der Antriebswelle (Hₐₙ), Hohlwellenrad der Abtriebsstufe (H_{ab}) und Abtriebseinheit (A_{E}) gleich sind.

7. System nach wenigstens einem der Ansprüche 1 bis 6, **dadurch gekennzeichnet, dass** die jeweiligen Baugruppen (A_{M}), (H_{ab}), (A_{W}), (A_{F}), (A₁), (A₂), (Hₐₙ) miteinander verbunden, insbesondere verschweisst, verpresst, verschraubt oder formschlüssig miteinander verbindbar sind.

8. System nach wenigstens einem der Ansprüche 1 bis 7, **dadurch gekennzeichnet, dass** der Abtriebseinheit (A_{E}) kundenspezifisch veränderbar, insbesondere anpassbar und als kundenspezifische Abtriebswelle (A_{W}) oder kundenspezifischer Abtriebsflansch (A_{F}) ausführbar ist.

9. System nach wenigstens einem der Ansprüche 1 bis 8, **dadurch gekennzeichnet, dass** zur Herstellung eines TP-Getriebes ein Hohlrad (20) des Hohlwellenrades (Hₐₙ) der Antriebsstufe an einem Planetenradträger (9) des Hohlwellenrades der Abtriebsstufe (H_{ab}) fest verbunden, insbesondere fest verschraubt ist.

10. System nach wenigstens einem der Ansprüche 1 bis 8, **dadurch gekennzeichnet, dass** zum Herstellen eines SP-Getriebes ein Hohlrad (20) des Hohlrades der Abtriebsstufe (H_{ab}) mit dem feststehenden Gehäuseteil (3) des Anbauteiles (A₂) fest verbunden, insbesondere verschraubt ist.

11. System nach Anspruch 9, **dadurch gekennzeichnet, dass** der Universalplaneten-radträger (9) des Hohlwellenrades der Abtriebsstufe (Hab) mit einem Flansch (16) oder einer Welle (18) der Abtriebswelle (A_{W}) verbunden, insbesondere verschweisst ist.

12. System nach wenigstens einem der Ansprüche 1 bis 11, **dadurch gekennzeichnet, dass** das Gehäuseteil (10) des Hohlwellenrades der Abtriebsstufe (Hab) mit dem Gehäuseteil (14) des Abtriebsflansches (AF) oder mit dem Gehäuseteil (17) der Abtriebswelle (AW) verbunden, insbesondere verschweisst ist.

## Claims

1. System for producing gearings, comprising different subassemblies (M, A_{M}, A₁, A₂, A₃, Hₐₙ, H_{ab,} A_{E})
**characterised in that**
the subassemblies (M, A_{M}, A_{1,} A₂, A₃, Hₐₙ, H_{ab}, A_{E}) can be assembled in a modular manner to form different gearings and a different gearing type with different kinematics can be produced via the selection of the output unit (A_{W}) either as an output shaft (A_{F}) or as an output flange (A_{F}) and a gearing with SP or TP kinematics is produced by means of different mounting of a ring wheel (20) on the right or on the left together with the attached components.

2. System according to Claim 1, **characterised in that** the subassemblies motor (M) and, if appropriate, motor adapter plate (A_{M}), hollow shaft wheel of the output stage (H_{ab}) and output units (A_{E}) are identical for all the gearings of different series.

3. System according to Claim 1 or 2, **characterised in that** a single-stage gearing can be assembled from the subassemblies motor (M), if appropriate, motor adapter plate (A_{M}) and hollow shaft wheel of the output stage (H_{ab}).

4. System according to Claim 1 or 2, **characterised in that** a two-stage gearing can be assembled from the subassemblies motor (M), if appropriate, motor adapter plate (A_{M}), a mounted part (A₂), a ring wheel of the drive stage (Hₐₙ), the hollow shaft wheel of the output stage (H_{ab}) and the output unit (A_{E}).

5. System according to Claim 1 or 2, **characterised in that** a three-stage gearing is formed from the subassemblies motor (M), if appropriate, motor adapter plate (A_{M}), mounted part (A₂), thereto attached mounted part (A₃), thereto attached hollow shaft of the drive stage (Hₐₙ) and thereto attached hollow shaft wheel of the output stage (H_{ab}) and output unit (A_{E}).

6. System according to Claim 4 and 5, **characterised in that**, in the case of different two-stage and three-stage gearings, the subassemblies motor (M), mounted part (A₂), ring wheel of the drive shaft (Hₐₙ), hollow shaft wheel of the output stage (H_{ab}) and output unit (A_{E}) are identical.

7. System according to at least one of Claims 1 to 6, **characterised in that** the respective subassemblies (A_{M}), (H_{ab}), (A_{W}), (A_{F}), (A₁), (A₂), (Hₐₙ) are connected to one another, in particular welded, pressed, screwed or positively connected to one another.

8. System according to at least one of Claims 1 to 7, **characterised in that** the output unit (A_{E}) can be modified, in particular adapted, customer-specifically and designed as a customer-specific output shaft (A_{W}) or customer-specific output flange (A_{F}).

9. System according to at least one of Claims 1 to 8, **characterised in that**, to produce a TP gearing, a ring wheel (20) of the hollow shaft wheel (Hₐₙ) of the drive stage is firmly connected, in particular firmly screwed, to a planet-wheel carrier (9) of the hollow shaft wheel of the output stage (H_{ab}).

10. System according to at least one of Claims 1 to 8, **characterised in that**, to produce an SP gearing, a ring wheel (20) of the ring wheel of the output stage (H_{ab}) is firmly connected, in particular screwed, to the stationary casing part (3) of the mounted part (A₂).

11. System according to Claim 9, **characterised in that** the universal planet-wheel carrier (9) of the hollow shaft wheel of the output stage (Hab) is connected, in particular welded, to a flange (16) or a shaft (18) of the output shaft (A_{W}).

12. System according to at least one of Claims 1 to 11, **characterised in that** the casing part (10) of the hollow shaft wheel of the output stage (Hab) is connected, in particular welded, to the casing part (14) of the output flange (AF) or to the casing part (17) of the output shaft (AW).

## Revendications

1. Système pour la production de transmissions composées de différents groupes d'assemblage (M, AM, A₁, A₂, A₃, Hₐₙ, H_{ab}, A_{E}),
**caractérisé par le fait**
**que** les groupes d'assemblage (M, AM, A₁, A₂, A₃, Hₐₙ, H_{ab}, A_{E}) peuvent être assemblés de manière modulaire pour former des transmissions différentes et que par le choix de l'unité de sortie (A_{W}) soit comme arbre de sortie (A_{F}), soit comme bride de sortie (A_{F}), peut être produit un type de transmission différent à cinématique différente, et que par montage différent d'une roue creuse (20) à droite ou à gauche avec des composants s'y raccordant est réalisée une transmission à cinématique SP ou TP.

2. Système selon la revendication 1, **caractérisé par le fait que** les groupes d'assemblage de moteur (M) et éventuellement la plaque d'adaptation de moteur (AM), la roue à arbre creux de l'étage de sortie (H_{ab}) et les unités de sortie (A_{E}) sont identiques pour toutes les transmissions de différentes rangées d'assemblage.

3. Système selon la revendication 1 ou 2, **caractérisé par le fait qu'**une transmission à un seul étage peut être assemblée à partir des groupes d'assemblage de moteur (M), éventuellement de la plaque d'adaptation de moteur (A_{M}). de la roue à arbre creux de l'étage de sortie (H_{ab}).

4. Système selon la revendication 1 ou 2, **caractérisé par le fait qu'**une transmission à deux étages peut être assemblée à partir des groupes d'assemblage de moteur (M), éventuellement de la plaque d'adaptation de moteur (A_{M}), d'un élément annexe (A₂), d'une roue creuse de l'étage d'entraînement (Hₐₙ), de la roue à arbre creux de l'étage de sortie (H_{ab}) et de l'unité de sortie {A_{E}).

5. Système selon la revendication 1 ou 2, **caractérisé par le fait qu'**une transmission à trois étages peut être assemblée à partir des groupes d'assemblage de moteur (M), éventuellement de la plaque d'adaptation de moteur (A_{M}), d'un élément annexe (A₂), d'un élément annexe (A₃) s'y raccordant, d'un arbre creux de l'étage de sortie (Hₐₙ) s'y raccordant et d'une roue à arbre creux de l'étage de sortie (H_{ab}) s'y raccordant et de l'unité de sortie (A_{E}).

6. Système selon la revendication 4 et 5, **caractérisé par le fait que**, dans des transmissions différentes à deux étages et à trois étages, les groupes d'assemblage de moteur (M), l'élément annexe (A₂), la roue creuse de l'arbre d'entraînement (Hₐₙ), la roue à arbre creux de l'étage de sortie (Hₐ) et l'unité de sortie (A_{E}) sont identiques.

7. Système selon au moins l'une des revendications 1 à 6, **caractérisé par le fait que** les groupes d'assemblage respectifs (AM), (H_{ab}), (A_{W}), (A_{F}), (A₁), (A₂), (Hₐₙ) sont assemblés entre eux, en particulier assemblés par soudage, par pressage, par vissage ou peuvent être assemblés entre eux en liaison de forme.

8. Système selon au moins l'une des revendications 1 à 7, **caractérisé par le fait que** l'unité de sortie (A_{E}) peut être réalisée de manière variable de manière spécifique au client, en particulier de manière adaptable et comme arbre de sortie (A_{W}) spécifique au client ou comme bride de sortie (A_{F}) spécifique au client.

9. Système selon au moins l'une des revendications 1 à 8, **caractérisé par le fait que**, pour la production d'une transmission TP, une roue creuse (20) de la roue à arbre creux (Hₐₙ) de l'étage d'entraînement est assemblée de manière fixe, en particulier assemblée de manière fixe par vissage, avec un porte-roue planétaire (9) de la roue à arbre creux de l'étage de sortie (H_{ab}).

10. Système selon au moins l'une des revendications 1 à 8, **caractérisé par le fait que**, pour la production d'une transmission SP, une roue creuse (20) de la roue creuse de l'étage de sortie (H_{ab}) est assemblée de manière fixe, en particulier assemblée par vissage, avec la partie de boîtier stationnaire (3) de l'élément annexe (A₂).

11. Système selon la revendication 9, **caractérisé par le fait que** le porte-roue planétaire universelle (9) de la roue à arbre creux de l'étage de sortie (H_{ab}) est assemblée, en particulier assemblée par vissage, avec une bride (16) ou un arbre (18) de l'arbre de sortie (A_{w}).

12. Système selon au moins l'une des revendications 1 à 11, **caractérisé par le fait que** la partie de boîtier (10) de la roue à arbre creux de l'étage de sortie (H_{ab}) est assemblée, en particulier assemblée par vissage, avec la partie de boîtier (14) de la bride de sortie (A_{F}) ou avec la partie de boîtier (17) de l'arbre de sortie (A_{w}).
